# EUROPÄISCHE PATENTSCHRIFT

(11) **EP 4 343 386 B1**
(45) Veröffentlichungstag und Bekanntmachung des Hinweises auf die Patenterteilung: **25.11.2026**
(21) Anmeldenummer: 23196396.8
(22) Anmeldetag: 08.09.2023
(51) Int. Cl.: G01S 19/07, G01S 19/03, G01S 19/14

(54) **POSITIONSBESTIMMUNGSSYSTEM UND VERFAHREN ZUR BESTIMMUNG DER POSITION EINES REFERENZPUNKTES AUF EINER SELBSTFAHRENDEN BAUMASCHINE**
POSITION DETERMINATION SYSTEM AND METHOD FOR DETERMINING POSITION OF REFERENCE POINT ON SELF-PROPELLED CONSTRUCTION MACHINE
SYSTÈME DE DÉTERMINATION DE POSITION ET PROCÉDÉ DE DÉTERMINATION DE POSITION D'UN POINT DE RÉFÉRENCE SUR UN ENGIN DE CHANTIER AUTOMOTEUR

(30) Priorität: 23.09.2022 DE 102022124484
(43) Veröffentlichungstag der Anmeldung: 27.03.2024
(73) Patentinhaber: Wirtgen GmbH, 53578 Windhagen (DE)
(72) Erfinder: Fritz, Matthias, 53773 Hennef (DE)
(74) Vertreter: Oppermann, Frank

(56) Entgegenhaltungen:
- US-A- 6 140 959
- US-A1- 2007 085 734
- US-A1- 2011 305 260
- US-A1- 2018 210 092
- US-A1- 2021 341 629
- US-A1- 2022 035 041

## Beschreibung

Die Erfindung betrifft ein Positionsbestimmungssystem zur Bestimmung der Position eines Referenzpunktes auf einer selbstfahrenden Baumaschine in einem von der Baumaschine unabhängigen Koordinatensystem. Darüber hinaus betrifft die Erfindung ein Verfahren zur Initialisierung einer im Umkreis einer selbstfahrenden Baumaschine aufgestellten Referenzstation zum Senden von Korrektursignalen, welche auf der Grundlage einer vorgegebenen Referenzstations-Position und der von der Referenzstation bestimmten Referenzstations-Position berechnet werden, an eine DGPS-Rover-Einheit, die auf der Grundlage der Satellitensignale eines globalen Navigationssatellitensystems und der Korrektursignale die Position eines Referenzpunktes auf der Baumaschine beschreibende Positionsdaten in einem von der Baumaschine unabhängigen Koordinatensystem bestimmt. Des Weiteren betrifft die Erfindung ein Verfahren zur Bestimmung der Position eines Referenzpunktes auf einer selbstfahrenden Baumaschine in einem von der Baumaschine unabhängigen Koordinatensystem.

Unter selbstfahrenden Baumaschinen werden sämtliche Baumaschinen verstanden, die über eine an einem Maschinenrahmen angeordnete Arbeitseinrichtung zur Errichtung von Baukörpern auf einem Gelände oder zum Verändern des Geländes verfügen. Zu den bekannten selbstfahrenden Baumaschinen gehören beispielsweise Straßenfräsmaschinen, Stabilisierer, Recycler, Gleitschalungsfertiger oder Straßenfertiger. Bei Straßenfräsmaschinen oder Recyclern umfasst die Arbeitseinrichtung eine mit Fräs- oder Schneidwerkzeugen bestückte Fräs-/Schneidwalze, mit der vom Gelände Material in einer vorgegebenen Arbeitsbreite abgetragen werden kann. Bei der Arbeitseinrichtung von Gleitschalungsfertigern handelt es sich um eine Vorrichtung zum Formen von fließfähigem Material, insbesondere Beton, mit welcher Baukörper unterschiedlicher Ausbildung, beispielsweise Leitwände oder Verkehrsinseln, hergestellt werden können. Die bekannten Straßenfertiger verfügen über eine Einbaubohle zum Einbau des Materials für den Straßenbelag. Bodenverdichter wie Straßenwalzen verfügen über wenigstens eine Verdichtungsvorrichtung, insbesondere Verdichterwalzen zur Verdichtung des Untergrundes.

Zur Errichtung von Baukörpern auf dem Gelände oder zum Verändern des Geländes wird bei selbstfahrenden Baumaschinen eine weitgehend automatische Steuerung der Baumaschine ohne nennenswerte Eingriffe des Fahrzeugführers oder der Fahrzeugführerin angestrebt. Daher kommen bei bekannten selbstfahrenden Baumaschinen Positionsbestimmungssysteme zum Einsatz, welche die Position eines Referenzpunktes auf der selbstfahrenden Baumaschine in einem von der Baumaschine unabhängigen Koordinatensystem bestimmen.

Unter der Bezeichnung GPS (Global Positioning System) ist ein Positionsbestimmungssystem bekannt, welches auf der Auswertung der Signallaufzeiten von Signalen mehrerer Satelliten beruht. Die Abkürzung GPS wird heute umgangssprachlich, zum Teil sogar fachsprachlich, als generische Bezeichnung oder pars pro toto für sämtliche Satellitennavigationssysteme benutzt, die korrekt unter dem Kürzel GNSS (Global Navigation(al) Satellite System) zusammengefasst werden (Wikipedia: GPS). Nachfolgend sollen unter GPS sämtliche Satellitennavigationssysteme verstanden werden.

Unter der Bezeichnung DGPS (Differential Global Positioning System) ist ein Verfahren bekannt, welches durch das Ausstrahlen von Korrektursignalen (Bahn- und Zeitsystem) die Genauigkeit der GPS-Positionsbestimmung steigert. Beim DGPS kommen auch als Basisstationen bezeichnete stationäre Referenzstationen zum Einsatz, mit denen sich aus der Abweichung der tatsächlichen und der empfangenen Position die tatsächlichen Laufzeiten der Signale für jeden Satelliten sehr genau bestimmen lassen. Die Differenzen der theoretischen und der tatsächlichen Signallaufzeiten werden an die DGPS-Empfänger übertragen, welche ihre Position mit diesen Korrektursignalen korrigieren (Wikipedia: DGPS). Nachfolgend werden unter (D)GPS-Empfänger sämtliche Empfänger für ein beliebiges GNSS und ggf. für Korrektursignale zu diesem System verstanden.

Aus der DE 197 56 676 C1 ist eine Straßenfräsmaschine bekannt, welche über ein DGPS zur Positionsbestimmung verfügt. Die Baumaschine weist eine DGPS-Rover-Einheit zum Empfangen von Satellitensignalen eines globalen Navigationssatellitensystems und von Korrektursignalen einer Referenzstation auf, wobei die DGPS-Rover-Einheit derart konfiguriert ist, dass auf der Grundlage der Satellitensignale und der Korrektursignale die Position eines Referenzpunktes auf der Baumaschine beschreibende Positionsdaten in einem von der Baumaschine unabhängigen Koordinatensystem bestimmt werden. Zur Erhöhung der Genauigkeit der Positionsbestimmung wird im Umkreis der Baumaschine eine Referenzstation aufgestellt, welche Korrektursignale an die DGPS-Rover-Einheit sendet. Wenn sich die Baumaschine im Gelände bewegt, muss die Referenzstation umgesetzt werden, da sich mit zunehmendem Abstand von DGPS-Rover-Einheit und Referenzstation die Genauigkeit der Positionsbestimmung verringert.

Das DGPS setzt voraus, dass die exakte Position der Referenzstation bekannt ist. Die Position der Referenzstation kann mit klassischen Vermessungsverfahren bestimmt werden. In der Praxis wird die Referenzstation aber an bestimmten Punkten im Gelände aufgestellt, die bei der Baustellenplanung zuvor festgelegt worden sind und deren Positions-daten bekannt sind. Diese vorgegebenen Positionsdaten werden bei der Einrichtung der Baustelle in die Referenzstation mittels einer Eingabeeinheit von Hand eingegeben. Eine erneute Dateneingabe ist immer dann erforderlich, wenn die Referenzstation umgesetzt wird. Dieses Vorgehen, erweist sich in der Praxis nicht nur als zeitaufwendig, sondern auch als fehleranfällig, da am jeweiligen Aufstellungspunkt die richtigen Positionsdaten eingegeben werden müssen. Die Bestimmung der exakten Koordinaten der im Gelände aufgestellten Referenzstation und die Übernahme dieser Koordinaten in eine Speichereinheit der Referenzstation wird nachfolgend als Initialisierung der Referenzstation bezeichnet.

Die US 2007/0085734 A1 beschreibt ein differentielles Positionsbestimmungssystem zur Bestimmung der Position eines Referenzpunktes auf einem landwirtschaftlichen Fahrzeug in einem von dem landwirtschaftlichen Fahrzeug unabhängigen Koordinatensystem. Das bekannte Positionsbestimmungssystem umfasst eine DGPS-Einheit und eine Referenzstation und beruht darauf, dass der aktuelle Standort der Referenzstation bestimmt wird und mit gespeicherten Standorten verglichen wird. Wenn das Ergebnis des Vergleichs kleiner als ein vorgegebener Schwellenwert ist, wird derjenige gespeicherte Standort als Referenzstandort identifiziert, der dem aktuellen Standort am nächsten ist.

Ein Positionsbestimmungssystem, bei dem der aktuelle Standort einer Referenzstation mit einem gespeicherten Standort verglichen wird, um einen Referenzstandort zu identifizieren ist auch aus der US 2018/0210092 A1 und der US 6 140 959 A bekannt. Das aus der US 2018/0210092 A1 bekannte Positionsbestimmungssystem ist einem Arbeitsfahrzeug und das Positionsbestimmungssystem der US 6 140 959 A einer mobilen Maschine zugeordnet.

Der Erfindung liegt die Aufgabe zugrunde, ein Positionsbestimmungssystem zu schaffen, welches in der Praxis die Einrichtung der Baustelle erleichtert und die Gefahr einer fehlerhaften Dateneingabe verringert. Eine weitere Aufgabe der Erfindung ist ein Verfahren zur Initialisierung einer im Umkreis einer selbstfahrenden Baumaschine aufgestellten Referenzstation und ein Verfahren zur Bestimmung der Position eines Referenzpunktes auf einer Baumaschine in einem von der Baumaschine unabhängigen Koordinatensystem anzugeben, welches eine einfache und sichere Initialisierung der Referenzstation erlaubt.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Die nachfolgend beschriebenen Ausführungsformen der Erfindung können eines oder mehrere der nachfolgend genannten Merkmale oder Merkmalskombinationen umfassen.

Ein mit einem unbestimmten Artikel bezeichnetes Merkmal kann auch mehrfach vorhanden sein, wenn der unbestimmte Artikel nicht mit einem ausdrücklichen Hinweis auf eine nur einmalige Verwendung zu verstehen ist. Eine Bezeichnung von Merkmalen mit einem Zahlwort, beispielsweise "erstes und zweites", schließt nicht aus, dass über die durch das Zahlwort angegebene Anzahl hinaus diese Merkmale noch weitere Male vorhanden sein können. Bei der Beschreibung sämtlicher Ausführungsformen ist der Ausdruck "kann" auch als "vorzugsweise" oder "zweckmäßigerweise" zu verstehen.

Das erfindungsgemäße Positionsbestimmungssystem zur Bestimmung der Position eines Referenzpunktes auf einer selbstfahrenden Baumaschine in einem von der Baumaschine unabhängigen Koordinatensystem umfasst eine DGPS-Rover-Einheit zum Empfangen von Satellitensignalen eines globalen Navigationssatellitensystems und von Korrektursignalen einer Referenzstation, wobei die DGPS-Rover-Einheit derart konfiguriert ist, dass auf der Grundlage der Satellitensignale und der Korrektursignale die Position eines Referenzpunktes auf der Baumaschine beschreibende Positionsdaten in einem von der Baumaschine unabhängigen Koordinatensystem bestimmt werden. Unter einer Rover-Einheit wird eine mobile Einheit verstanden, welche eine Position der selbstfahrenden Baumaschine bestimmen kann, wenn die Rover-Einheit der Baumaschine zugeordnet wird. Die Rover-Einheit kann mehrere Komponenten umfassen, beispielsweise eine GPS-Antenne und eine Rechen- und Auswerteeinheit, wobei die GPS-Antenne an dem Referenzpunkt angeordnet wird, so dass die GPS-Antenne die Satellitensignale empfangen kann. Mit der bekannten Position des Referenzpunktes auf der Baumaschine in dem von der Baumaschine unabhängigen Koordinatensystem kann dann aufgrund einer bekannten Position der Arbeitseinrichtung der Baumaschine relativ zum Referenzpunkt beispielsweise die Position des Arbeitswerkzeuges in dem von der Baumaschine unabhängigen Koordinatensystem bestimmt werden.

Die GPS-Rover-Einheit bestimmt die exakte Position unter dem Einsatz einer im Umkreis der Baumaschine aufzustellenden Referenzstation zum Senden von Korrektursignalen (Korrekturdaten) an die DGPS-Rover-Einheit. Zur Erzeugung der Korrektursignale muss die genaue Position der Referenzstation bekannt sein. Die Referenzstation ist derart eingerichtet, dass sie ihre eigene Position bestimmen kann. Diese Positionsbestimmung ist aber ungenau, da diese Positionsbestimmung nicht auf dem DGPS-Verfahren beruht. Daher muss der Referenzstation die tatsächliche Referenzstations-Position durch eine Initialisierung mitgeteilt werden. Die Referenzstation ist derart konfiguriert, dass die Korrektursignale dann auf der Grundlage der tatsächlichen Referenzstations-Position und der von der Referenzstation bestimmten (empfangenen) Referenzstations-Position berechnet werden.

Wenn mehrere Baumaschinen auf einer Baustelle zum Einsatz kommen, können den einzelnen Baumaschinen zugeordnete Referenzstationen vorgesehen sein, die jeweils Korrektursignale an die jeweilige Baumaschine senden. Es ist aber auch möglich, dass nur eine Referenzstation vorgesehen ist, deren Korrektursignale von mehreren Baumaschinen empfangen werden. Grundsätzlich können auch mehrere Basisstationen vorgesehen sein, die an unterschiedlichen vorgegebenen Referenzstations-Positionen eingerichtet werden und damit einen größeren Bereich der Baustelle abdecken.

Das Funktionsprinzip des erfindungsgemäßen Positionsbestimmungssystem bzw. des erfindungsgemäßen Verfahrens beruht darauf, dass die Referenzstation an bestimmten Orten aufgestellt wird, deren Lage bekannt ist. Diese Orte können bei der Planung der Baustelle im Büro festgelegt werden. Beispielsweise können die Orte geeignete Markierungen im Gelände im Umkreis des Arbeitsbereichs der Baumaschine sein, an welchen die Referenzstationen aufgestellt werden, wenn sich die Maschine entlang eines vorgegebenen Pfades, beispielsweise entlang der zu bearbeitenden Fahrbahn, bewegt.

Bei dem erfindungsgemäßen Positionsbestimmungssystem wird zur Initialisierung der Referenzstation ein die vorgegebenen Positionen einer Referenzstationen beschreibender Positions-Datensatz aus einer Speichereinheit ausgelesen, wobei die tatsächliche Referenzstations-Position auf der Grundlage eines Vergleichs der vorgegebenen Positionen der Referenzstation mit der von der Referenzstation bestimmten Referenzstations-Position ermittelt wird.

Unter den vorgegebenen Positionen einer Referenzstationen werden die Orte im Gelände verstanden, deren Positionen bekannt sind und an denen die Referenzstationen entlang des zu bearbeitenden Pfades aufgestellt werden sollen. Diese Positionen sind in der Speichereinheit gespeichert und werden aus der Speichereinheit ausgelesen. In diesem Zusammenhang werden unter einer Speichereinheit sämtliche Datenspeicher verstanden, auf denen Daten gespeichert werden können und von denen die Daten ausgelesen werden können, beispielsweise die bekannten elektronischen Speicher (Halbleiterspeicher) und Speichermedien, welche mit elektronischen Geräten gelesen oder beschrieben werden können.

Der Vergleich erlaubt eine automatisierte Zuordnung der betreffenden Koordinatenwerte, so dass die Koordinatenwerte der tatsächlichen Position der Referenzstation aus dem Positions-Datensatz ausgewählt werden können, ohne dass zusätzliche Eingaben auf der Baustelle erforderlich sind. Dadurch wird die Initialisierung vereinfacht und fehlerhafte Eingaben werden ausgeschlossen.

In diesem Zusammenhang wird unter einem Vergleich ein in Beziehung setzen der einzelnen Positionen verstanden, um Abweichungen der bekannten, exakten Positionen von den gemessenen, ungenauen Positionen feststellen zu können, so dass die Werte einander richtig zugeordnet werden können. Der Vergleich kann auf der Grundlage bekannter Rechenoperationen oder Algorithmen erfolgen.

Eine Ausführungsform des erfindungsgemäßen Positionsbestimmungssystem sieht vor, dass das Positionsbestimmungssystem derart konfiguriert ist, dass Abweichungen der Koordinatenwerte der vorgegebenen Positionen der Referenzstation von der von der Referenzstation bestimmten Referenzstations-Position bestimmt werden, wobei als tatsächliche Referenzstations-Position die vorgegebene Position der Referenzstation angenommen wird, deren Koordinatenwerte von den Koordinatenwerten der von der Referenzstation bestimmten Referenzstations-Position um einen kleinsten Wert abweicht oder um kleinste Werte abweichen. Dieser Auswertung können unterschiedliche Koordinatensystem bzw. Koordinaten zugrunde liegen, wobei einzelne oder mehrere Koordinatenwerte einer Position verglichen werden können. Aus mehreren Koordinatenwerten können auch Mittelwerte gebildet werden, die miteinander in Beziehung gesetzt werden.

Eine alternative Ausführungsform des erfindungsgemäßen Positionsbestimmungssystem sieht vor, dass das Positionsbestimmungssystem derart konfiguriert ist, dass Abweichungen der Koordinatenwerte der vorgegebenen Positionen der Referenzstation von der von der Referenzstation bestimmten Referenzstations-Position bestimmt werden, wobei als tatsächliche Position der Referenzstation die vorgegebene Position der Referenzstation angenommen wird, deren Koordinatenwerte von den Koordinatenwerten der von der Referenzstation bestimmten Referenzstations-Position um einen Wert abweicht, der kleiner oder gleich als ein vorgegebener Grenzwert ist, oder um Werte abweichen, die kleiner oder gleich als vorgegebene Grenzwerte sind. Wenn die Abweichungen sämtlicher gemessener Referenzstation-Positionen zu groß sein sollten, dass sie diesen Kriterien nicht genügen, kann beispielsweise ein akustischer und/oder optischer Alarm für das Bedienpersonal gegeben werden, welcher das Bedienpersonal zu einer Überprüfung bzw. einer manuellen Dateneingabe auffordert.

Die für die Initialisierung der Referenzstation erforderlichen Komponenten des erfindungsgemäßen Positionsbestimmungssystems können Bestandteil der DGPS-Rover-Einheit und/oder der Referenzstation und/oder einer externen Einheit sein, wobei die DGPS-Rover-Einheit Bestandteil der selbstfahrenden Baumaschine sein kann, deren Position bestimmt werden soll. Der zwischen den einzelnen Komponenten erforderliche Datenaustausch kann mittels der bekannten Datenübertragungseinrichtungen erfolgen, beispielsweise per WLAN, Bluetooth oder Internet. Für die Datenübertragung zur Initialisierung der Referenzstation kann besonders bevorzugt dieselbe Datenverbindung verwendet werden, über welche die DGPS-Rover-Einheit das Korrektursignal von der Referenzstation empfängt.

Die Referenzstation kann die Positionsdaten, welche die von der Referenzstation bestimmte Referenzstations-Position beschreiben, an die DGPS-Rover-Einheit senden, und die DGPS-Rover-Einheit kann diese Positionsdaten von der Referenzstation empfangen. Die DGPS-Rover-Einheit kann den die vorgegebenen Positionen einer Referenzstation beschreibenden Positions-Datensatz dann aus der Speichereinheit auslesen und die tatsächliche Referenzstations-Position auf der Grundlage eines Vergleichs der vorgegebenen Positionen der Referenzstation mit der von der Referenzstation bestimmten Referenzstations-Position ermitteln und die tatsächliche Referenzstations-Position beschreibende Positionsdaten an die Referenzstation senden und die Referenzstation kann diese Positionsdaten empfangen. Die eigentliche Auswertung der Daten findet somit in der DGPS-Rover-Einheit statt, die sich auf der selbstfahrenden Baumaschine befindet. Die Daten können auch mit einer mit der DGPS-Rover-Einheit verbundenen Datenverarbeitungseinrichtung ausgewertet werden. Die Datenübertragung von der Referenzstation zu der DGPS-Rover-Einheit kann über die bereits bei den bekannten Geräten bestehenden Datenübertragungsstrecken und/oder zusätzliche Datenübertragungsstrecken erfolgen. Diese Ausführungsform setzt aber eine bidirektionale Datenübertragung zwischen Referenzstation und DGPS-Rover-Einheit voraus, um die von der DGPS-Rover-Einheit ermittelten Positionswerte an die Referenzstation zu übertragen. Bidirektional ist hierbei funktional zu verstehen und beispielsweise auch durch zwei unidirektionale Verbindungen realisierbar.

Wenn mehrere Baumaschinen auf der Baustelle vorgesehen sind, kann eine GPS-Rover-Einheit vorgesehen sein, welche die Referenzstation bei der Ermittlung ihrer tatsächlichen Position unterstützt und alle anderen präsenten DGPS-Einheiten können das korrigierte Signal nutzen.

Die Speichereinheit kann eine interne Speichereinheit der DGPS-Rover-Einheit sein. Beispielsweise kann in der DGPS-Rover-Einheit ein elektronischer Speicher (Halbleiterspeicher) vorgesehen sein, in welchen die Positions-Daten eingelesen werden können. Die Speichereinheit kann aber auch eine externe Speichereinheit sein, wobei die DGPS-Rover-Einheit zum Datenaustausch mit der externen Speichereinheit kommuniziert. Dies schließt nicht aus, dass auch die DGPS-Rover-Einheit über einen Speicher verfügt, um die aus dem externen Speicher ausgelesenen Daten für die Rechenoperationen ablegen zu können.

Das Positionsbestimmungssystem kann eine Server-Einheit umfassen, welche die Speichereinheit zum Speichern eines Positions-Datensatzes aufweist, welcher die vorgegebenen Positionen der Referenzstation beschreibt. Bei diesem Ausführungsbeispiel sind die Referenzstation und die Server-Einheit derart konfiguriert, dass die Referenzstation an die Server-Einheit die Positionsdaten sendet, welche die von der Referenzstation bestimmte Referenzstations-Position beschreiben, und diese Positionsdaten von der Server-Einheit empfangen werden, und dass die Server-Einheit die tatsächliche Referenzstations-Position auf der Grundlage eines Vergleichs der vorgegebenen Positionen der Referenzstation mit der von der Referenzstation bestimmten Referenzstations-Position ermittelt und die tatsächliche Referenzstations-Position beschreibende Positionsdaten an die Referenzstation sendet und die Referenzstation diese Positionsdaten empfängt.

Grundsätzlich wird die von der Referenzstation bestimmte Referenzstations-Position zunächst in einem vom verwendeten (D)GPS-System abhängigen, sphärischen Koordinatensystem ermittelt und dann zur weiteren Verwendung in ein baustellenbezogenes kartesisches Koordinatensystem transformiert.

Vorzugsweise liegt der die vorgegebenen Positionen beschreibende Positions-Datensatz ebenfalls in dem baustellenbezogenen kartesischen Koordinatensystem vor. Die Bestimmung der tatsächlichen Referenzstations-Position erfolgt dann durch einen Vergleich der kartesischen Koordinaten der bestimmten Referenzstation-Position und des Positions-Datensatzes.

Ebenfalls ist es jedoch denkbar, dass der die vorgegebenen Positionen beschreibende Positions-Datensatz in dem von der Referenzstation verwendeten sphärischen Koordinatensystem vorliegt. Dann erfolgt die Bestimmung der tatsächlichen Referenzstations-Position durch einen Vergleich der sphärischen Koordinaten der bestimmten Referenzstations-Position und des Positions-Datensatzes.

Anschließend kann die in sphärischen Koordinaten ermittelte tatsächliche Referenzstations-Position in ein baustellenbezogenes kartesisches Koordinatensystem transformiert werden.

Nachfolgend werden mehrere Ausführungsbeispiele der Erfindung unter Bezugnahme auf die Zeichnungen im Einzelnen beschrieben.

Es zeigen:
- Fig. 1: eine selbstfahrende Baumaschine in der Seitenansicht,
- Fig. 2: die selbstfahrende Baumaschine von Fig. 1 in der Draufsicht,
- Fig. 3: ein Ausführungsbeispiel des Positionsbestimmungssystem zur Bestimmung der Position eines Referenzpunktes auf der Baumaschine,
- Fig. 4: die sich entlang eines Pfades bewegende selbstfahrende Baumaschine, wobei die Referenzstation an einer ersten Position aufgestellt ist,
- Fig. 5: die sich entlang eines Pfades bewegende selbstfahrende Baumaschine, wobei die Referenzstation an einer zweiten Position aufgestellt ist,
- Fig. 6: die sich entlang eines Pfades bewegende selbstfahrende Baumaschine, wobei die Referenzstation an einer dritten Position aufgestellt ist,
- Fig. 7: die sich entlang eines Pfades bewegende selbstfahrende Baumaschine, wobei die Referenzstation an einer vierten Position aufgestellt ist,
- Fig. 8: ein weiteres Ausführungsbeispiel des Positionsbestimmungssystem zur Bestimmung der Position eines Referenzpunktes auf der Baumaschine und
- Fig. 9: ein weiteres Ausführungsbeispiel des Positionsbestimmungssystem zur Bestimmung der Position eines Referenzpunktes auf der Baumaschine

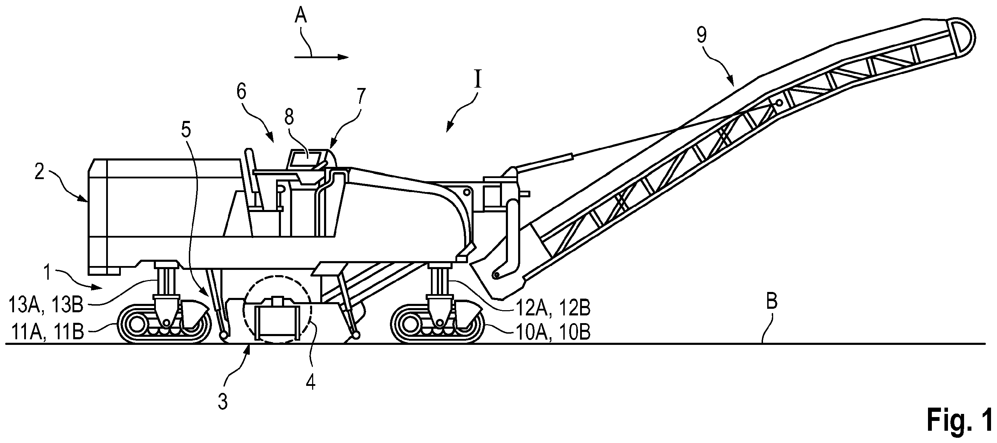

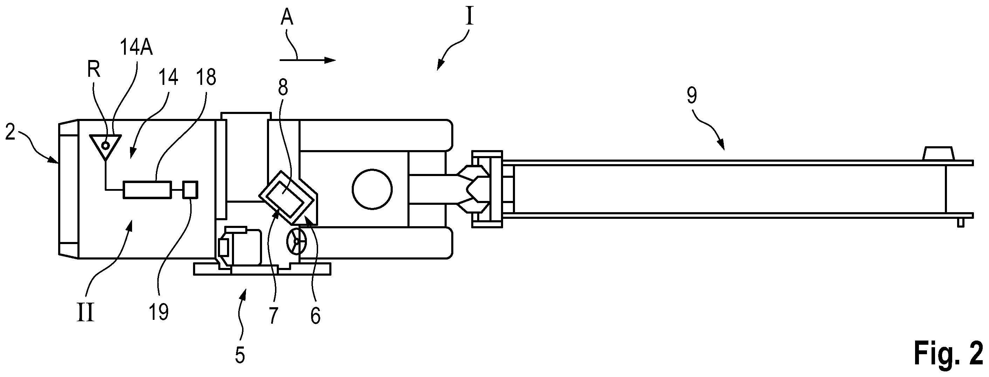

Die Figuren 1 und 2 zeigen in der Seitenansicht und der Draufsicht als Beispiel für eine selbstfahrende Baumaschine I eine Straßenfräsmaschine zum Abfräsen von Straßenbelägen, bei der es sich um eine Frontlader-Straßenfräsmaschine handelt. Die Baumaschine I verfügt über einen von einem Fahrwerk 1 getragenen Maschinenrahmen 2, an dem eine Arbeitseinrichtung 3 angeordnet ist, mit der die für die Baumaßnahme erforderlichen Arbeiten durchgeführt werden können. Die Arbeitseinrichtung 3 weist eine in Fig. 1 nur andeutungsweise dargestellte Fräswalze 4 auf, die in einem Fräswalzengehäuse 5 angeordnet ist. Oberhalb des Fräswalzengehäuses 5 befindet sich am Maschinenrahmen der Fahrstand 6 mit einem Bedienpult 7 für den Maschinenführer oder die Maschinenführerin. Das Bedienpult 7 kann einen Touchscreen 8 aufweisen, auf dem Bedienfelder (Button) dargestellt werden. Das abgefräste Material wird mit einer Fördereinrichtung 9 abgeführt, die schwenkbar und neigbar an der Vorderseite des Maschinenrahmens 2 angeordnet ist.

Die selbstfahrende Baumaschine I kann in Arbeitsrichtung A ein vorderes linkes Laufwerk 10A und ein vorderes rechtes Laufwerk 10B und ein hinteres linkes Laufwerk 11A und ein hinteres rechtes Laufwerk 11B aufweisen, denen eine in Arbeitsrichtung A vordere, linke und rechte Hubeinrichtung 12A, 12B und eine hintere, linke und rechte Hubeinrichtung 13A, 13B zugeordnet sind, so dass durch Einfahren bzw. Ausfahren der Hubeinrichtungen die Höhe und Neigung des Maschinenrahmens 2 gegenüber der Bodenoberfläche B verändert werden kann.

Zur Bestimmung der Position eines Referenzpunktes R auf der Baumaschine I ist eine Positionsbestimmungseinrichtung II vorgesehen, deren Aufbau und Funktion nachfolgend im Einzelnen beschrieben wird.

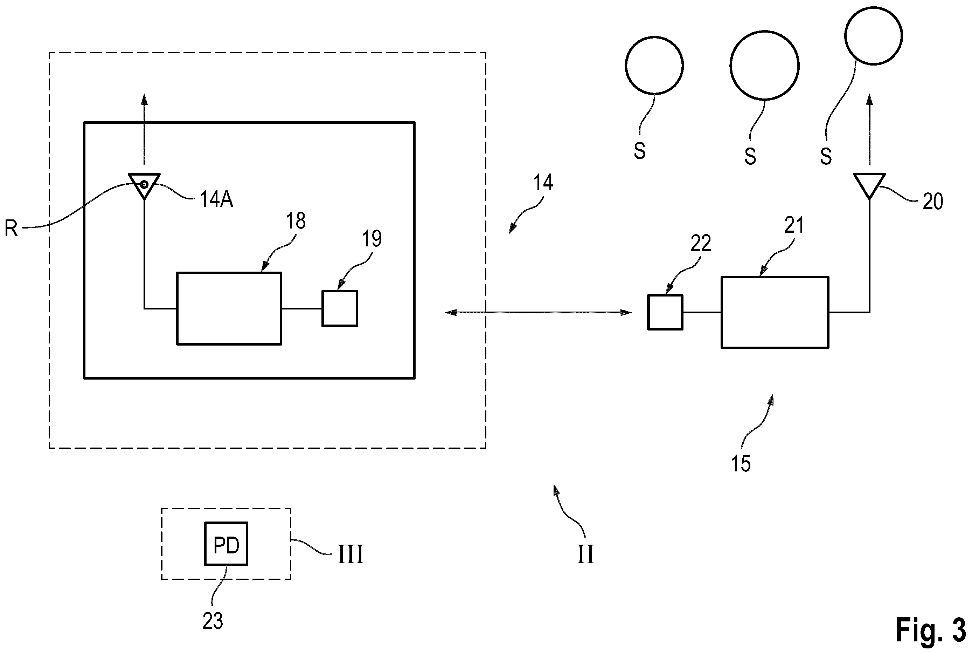

Fig. 3 zeigt eine vereinfachte schematische Darstellung der Positionsbestimmungseinrichtung II, die eine DGPS-Rover-Einheit 14 und eine Referenzstation 15 umfasst. Die DGPS-Rover-Einheit 14 ist an der Baumaschine I vorgesehen, so dass sich die DGPS-Rover-Einheit 14 mit der Baumaschine I im Gelände bewegt, während die Referenzstation 15 im Umkreis der Baumaschine aufgestellt wird.

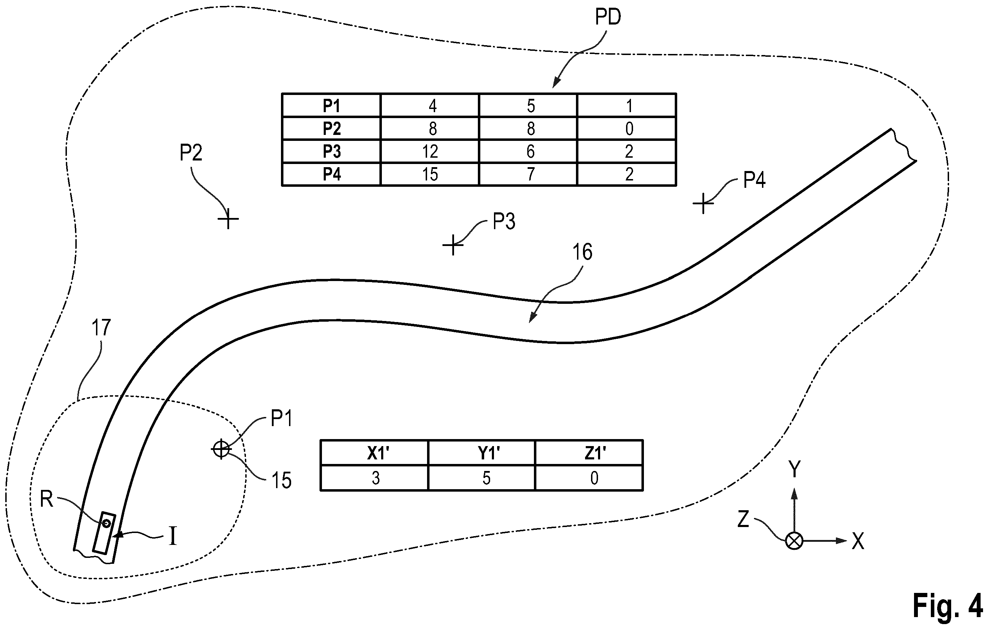

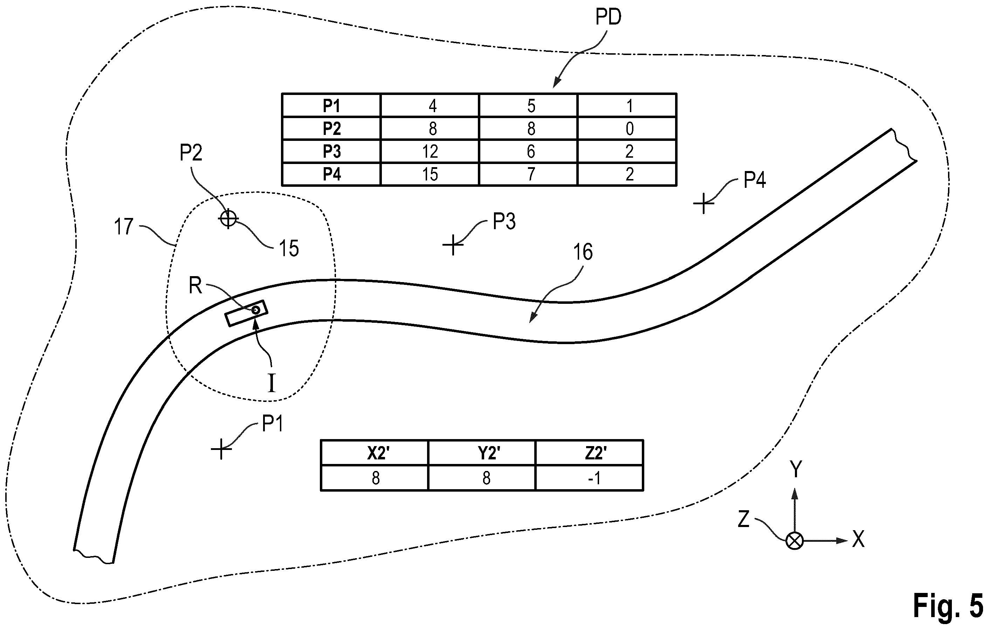

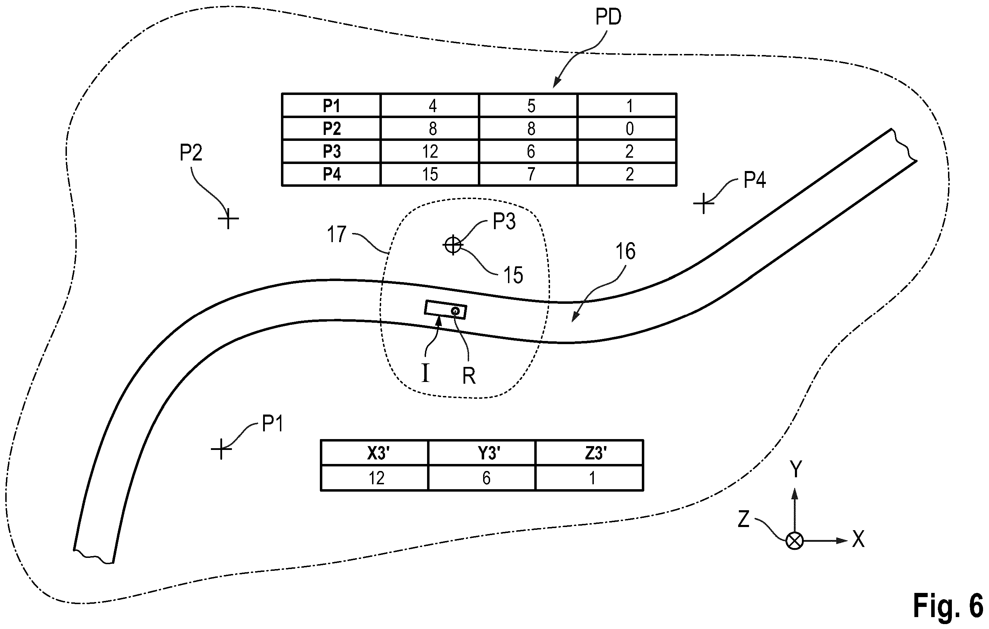

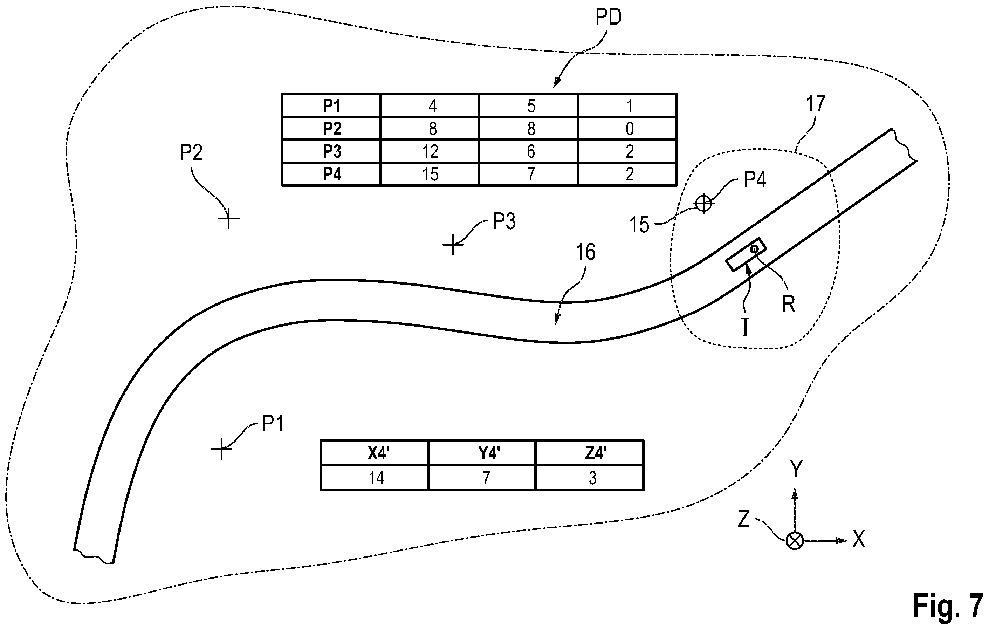

Die Figuren 4 bis 7 zeigen die Bewegung der Baumaschine I, insbesondere Straßenfräsmaschine, im Gelände entlang eines Pfades 16, insbesondere einer Straße. In den Figuren 4 bis 7 sind die Aufstellorte mit einem Kreuz gekennzeichnet, an denen die Referenzstation 15 aufgestellt wird. Die Aufstellorte, die bei der Planung der Baustelle vorgegeben werden, können beispielsweise Markierungen im Gelände sein, welche sich vor Ort leicht auffinden lassen. Während sich die Baumaschine I entlang des Pfades 16 bewegt, wird die Referenzstation 15 mehrfach umgesetzt, so dass sich die Referenzstation immer in einem Umkreis 17 der Baumaschine I befindet, welcher einen bestimmten Radius nicht überschreitet. Die Positionen P1(X1, Y1, Z1), P2(X2, Y2, Z2), P3(X3, Y3, Z3), P4(X4, Y4, Z4) der Aufstellorte werden durch Koordinatenwerte in einem von der Baumaschine unabhängigen Koordinatensystem beschrieben. Diese Koordinatenwerte können X, Y, Z Koordinatenwerte eines kartesischen Koordinatensystems sein. Zur Veranschaulichung sind die X, Y, Z-Koordinatenwerte für die einzelnen Positionen P1(X1, Y1, Z1), P2(X2, Y2, Z2), P3(X3, Y3, Z3), P4(X4, Y4, Z4) jeweils in einer Tabelle dargestellt. Diese Koordinatenwerte bilden einen Positions-Datensatz PD, der die vorgegebenen Positionen einer Referenzstation beschreibt.

Die DGPS-Rover-Einheit 14 umfasst eine GPS-Antenne 14A die an dem Referenzpunkt R der Baumaschine I angeordnet ist, eine Rechen- und Auswerteeinheit 18 und eine bidirektionale Sende- und Empfangseinheit 19. Die Referenzstation 15 weist eine GPS-Antenne 20, eine Rechen- und Auswerteeinheit 21 und eine bidirektionale Sende- und Empfangseinheit 22 auf. DGPS-Rover-Einheit 14 und Referenzstation 15 kommunizieren mittels der Sende- und Empfangseinheiten 19, 22, die stellvertretend für die bekannten Übertragungsstrecken stehen sollen, die nach den bekannten Übertragungsverfahren arbeiten können (RF-Sender/Empfänger, WLAN, Bluetooth, etc.).

Die GPS-Antenne 20 der Referenzstation 15 empfängt die Satellitensignale mehrerer Satelliten eines Satellitennavigationssystems S, wobei deren Rechen- und Auswerteeinheit 21 derart konfiguriert ist, dass aus den Satellitensignalen die Positionen P1'(X1', Y1', Z1'), P2'(X2', Y2', Z2'), P3'(X3', Y3', Z3'), P4'(X4', Y4', Z4') der Referenzstation 15 mit einer dem GPS-System entsprechenden Genauigkeit bestimmt werden. Diese Positionen werden als die von der Referenzstation bestimmten oder gemessenen oder empfangenen Positionen P1', P2', P3', P4' der Referenzstation 15 bezeichnet. Die Rechen- und Auswerteeinheit 21 der Referenzstation 15 ist weiterhin derart konfiguriert, dass Korrektursignale nach den bekannten Verfahren auf der Grundlage der tatsächlichen Referenzstations-Position P1(X1, Y1, Z1), P2(X2, Y2, Z2), P3(X3, Y3, Z3), P4(X4, Y4, Z4) und der gemessenen Referenzstations-Position P1'(X1', Y1', Z1'), P2'(X2', Y2', Z2'), P3(X3', Y3', Z3'), P4(X4', Y4', Z4') berechnet werden, wozu neben der gemessenen Referenzstations-Position noch die tatsächliche Referenzstations-Position bekannt sein muss.

Die DGPS-Rover-Einheit 14 empfängt ebenfalls die Satellitensignale mehrerer Satelliten eines globalen Navigationssatellitensystems S mittels der GPS-Antenne 14A Darüber hinaus empfängt die DGPS-Rover-Einheit 14 die Korrektursignale der Referenzstation 15 mittels der Sende-Empfangseinheit 19. Die Rechen- und Auswerteeinheit 18 der DGPS-Rover-Einheit 14 ist derart konfiguriert, dass nach den bekannten Verfahren auf der Grundlage der Satellitensignale und der Korrektursignale die (genaue) Position des Referenzpunktes (R) auf der Baumaschine beschreibende Positionsdaten) in dem von der Baumaschine unabhängigen Koordinatensystem (X, Y, Z) mit einer höheren Genauigkeit bestimmt wird.

Die Rechen- und Auswerteeinheit 18 der DGPS-Rover-Einheit 14 und die Rechen- und Auswerteeinheit 21 der Referenzstation 15 können beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen. Es ist auch eine Kombination der verschiedenen Komponenten möglich.

Nachfolgend werden verschiedene Ausführungsbeispiele des Positionsbestimmungssystems II beschrieben.

Fig. 3 zeigt ein Ausführungsbeispiel, bei dem die Rechen- und Auswerteeinheit 18 der DGPS-Rover-Einheit 14 mit einer externen Speichereinheit 23 zusammenwirkt, in welcher der die vorgegebenen Positionen der Referenzstation beschreibender Positions-Datensatz PD gespeichert ist. Diese Speichereinheit 23 kann auch der Datenspeicher einer Server-Einheit III (Dateiserver) sein, wobei die Rechen- und Auswerteeinheit 18 mit dem Dateiserver ein Netzwerk bildet, das ein WLAN sein kann. Der Datenaustausch mit der externen Speichereinheit kann aber auch über das Internet erfolgen.

Die Rechen- und Auswerteeinheit 18 der DGPS-Rover-Einheit 14 und die Rechen- und Auswerteeinheit 21 der Referenzstation 15 sind derart konfiguriert, dass zur Initialisierung der Referenzstation die nachfolgenden Verfahrensschritte durchgeführt werden.

Die an den Positionen P1(X1, Y1, Z1), P2(X2, Y2, Z2), P3(X3, Y3, Z3), P4(X4, Y4, Z4) aufgestellte Referenzstation 15 empfängt die Satellitensignale und sendet die gemessenen Positionsdaten P1'(X1', Y1', Z1'), P2'(X2', Y2', Z2'), P3(X3', Y3', Z3'), P4(X4', Y4', Z4') mittels der Sende- und Empfangseinheit 22 an die DGPS-Rover-Einheit 15, welche die von der Referenzstation bestimmte Referenzstations-Position beschreiben (Fig. 3, Figuren 4 bis 7). Diese Positionsdaten werden von der DGPS-Rover-Einheit mittels der Sende- und Empfangseinheit 19 empfangen. Die DGPS-Rover-Einheit 14 liest den die vorgegebenen Positionen der Referenzstation beschreibenden Positions-Datensatz PD aus der externen Speichereinheit 23 aus. Auf der Grundlage eines Vergleichs der vorgegebenen Positionen der Referenzstation P1(X1, Y1, Z1), P2(X2, Y2, Z2), P3(X3, Y3, Z3), P4(X4, Y4, Z4) mit der von der Referenzstation 15 bestimmten Referenzstations-Position P1'(X1', Y1', Z1'), P2'(X2', Y2', Z2'), P3(X3', Y3', Z3'), P4(X4', Y4', Z4') ermittelt die DGPS-Rover-Einheit 14 die tatsächliche Referenzstations-Position P1(X1, Y1, Z1), P2(X2, Y2, Z2), P3(X3, Y3, Z3), P4(X4, Y4, Z4) und sendet die tatsächliche Referenzstations-Position beschreibende Positionsdaten mittels der Sende- und Empfangseinheit 19 an die Referenzstation 15, welche diese Positionsdaten mittels der Sende- und Empfangseinheit 22 empfängt. Nachdem der Referenzstation 15 ihre tatsächliche Position bekannt ist, berechnet deren Rechen- und Auswerteeinheit 22 die Korrektursignale, die sie an die DGPS-Rover-Einheit 15 sendet. Die Rechen- und Auswerteeinheit 18 der DGPS-Rover-Einheit 14 berechnet dann auf der Grundlage der Satellitensignale und der Korrektursignale die die genaue Position des Referenzpunktes R auf der Baumaschine beschreibenden Positionsdaten.

Zur Auswahl der zugehörigen Koordinatenwerte vergleicht die Rechen- und Auswerteeinheit 18 der DGPS-Rover-Einheit 14 die empfangene Referenzstations-Position P1'(X1', Y1', Z1'), P2'(X2', Y2', Z2'), P3(X3', Y3', Z3'), P4(X4', Y4', Z4') der Referenzstation 15 mit den vorgegebenen Referenzstations-Positionen P1(X1, Y1, Z1), P2(X2, Y2, Z2), P3(X3, Y3, Z3), P4(X4, Y4, Z4) aus dem Positions-Datensatz PD, welche den einzelnen Aufstellorten zugeordnet sind. Dies soll anhand des folgenden Ausführungsbeispiels beschrieben werden.

Fig. 3 zeigt die an der Position P1 aufgestellte Referenzstation 15. Die gemessenen Koordinatenwerte (X1', Y1', Z1') der Referenzstations-Position sind (3, 5, 0). Die Rechen- und Auswerteeinheit 18 der DGPS-Rover-Einheit 14 bestimmt die Abweichungen der Koordinatenwerte (X1=4, Y1=5, Z1=1), (X2=8, Y2=8, Z2=0), (X3=12, Y3=6, Z3=2, (X4=15, Y4=7, Z4=2) der vorgegebenen Positionen der Referenzstation von der von der Referenzstation 14 bestimmten Referenzstations-Position (3, 5, 0). Es zeigt sich, dass für die Position P1 die Abweichungen der Koordinatenwerte am kleinsten ist. Daher wird als tatsächliche Position der Referenzstation die Position mit den Koordinatenwerten (4, 5, 1) angenommen. Beispielsweise kann eine mittlere Abweichung aus den Koordinatenwerten wie folgt berechnet werden.

### Position P1

Betrag von 3-4=1
Betrag von 5-5=0
Betrag von 0-1=1
Mittlere Abweichung: (1+0+1)/3=2/3 [kleinste mittlere Abweichung)]

### Position P2

Betrag von 3-8=5
Betrag von 5-8=3
Betrag von 0-0=0
Mittlere Abweichung: (5+3+0)/3=8/3

### Position P3

Betrag von 3-12=9
Betrag von 5-6=1
Betrag von 0-2=2
Mittlere Abweichung: (9+1+2)/3=4

### Position P4

Betrag von 3-15=12
Betrag von 5-7=2
Betrag von 0-2=2
Mittlere Abweichung: (12+2+2)/3=16/3

Die Rechen- und Auswerteeinheit 18 der DGPS-Rover-Einheit 14 wählt die Position P1 mit den Koordinatenwerten (4, 5, 1) aus, da bei der Position P1 die mittlere Abweichung 2/3 am kleinsten ist. Es können aber beispielsweise auch die Abstände (Wegstrecken) in der Ebene (zweidimensional) oder im Raum (dreidimensional) zwischen den Positionen in dem Koordinatensystem berechnet werden und die Position mit dem kleinsten Abstand ausgewählt werden.

Die Rechen- und Auswerteeinheit 18 der DGPS-Rover-Einheit 14 kann auch derart konfiguriert sein, dass als tatsächliche Position der Referenzstation 15 die vorgegebene Position der Referenzstation angenommen wird, deren Koordinatenwerte von den Koordinatenwerten der von der Referenzstation bestimmten Referenzstations-Position um einen Wert abweicht, der kleiner oder gleich als ein vorgegebener Grenzwert ist, oder um Werte abweichen, die kleiner oder gleich als vorgegebene Grenzwerte sind. Beispielsweise kann der Betrag der Differenz der einzelne Koordinatenwerte wie folgt berechnet und beispielsweise mit dem Grenzwert 1 verglichen werden:
Position P1 (Grenzwert 1)
Betrag von 3-4=1
Betrag von 5-5=0
Betrag von 0-1=1

| | | |
|---|---|---|
| 1 ≤ 1 | 0 ≤ 1 | 1 ≤ 1 |

Position P2 (Grenzwert 1)
Betrag von 3-8=5
Betrag von 5-8=3
Betrag von 0-0=0

| | | |
|---|---|---|
| 5 > 1 | 3 > 1 | 0 ≤ 1 |

Position P3 (Grenzwert 1)
Betrag von 3-12=9
Betrag von 5-6=1
Betrag von 0-2=2

| | | |
|---|---|---|
| 9 > 1 | 1 ≤ 1 | 2 > 1 |

Position P4 (Grenzwert 1)
Betrag von 3-15=12
Betrag von 5-7=2
Betrag von 0-2=2

| | | |
|---|---|---|
| 12 > 1 | 2 > 1 | 2 > 1 |

Die Rechen- und Auswerteeinheit 18 der DGPS-Rover-Einheit 14 wählt die Position P1 mit den Koordinatenwerten (4, 5, 1) aus, da die Koordinatenwerte bei der Position 1 kleiner oder gleich dem Grenzwert 1 sind.

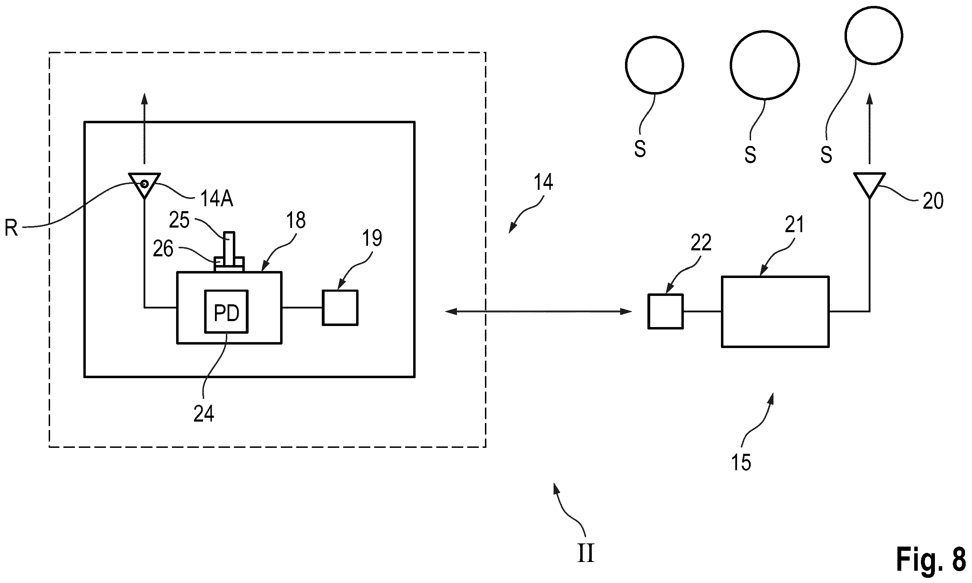

Fig. 8 zeigt ein Ausführungsbeispiel, dass sich von dem unter Bezugnahme auf Fig. 3 beschriebenen Ausführungsbeispiel dadurch unterscheidet, dass die Rechen- und Auswerteeinheit 18 der DGPS-Rover-Einheit 14 eine interne Speichereinheit 24 aufweist, auf welcher der Positions-Datensatz PD gespeichert ist. Die einander entsprechenden Komponenten sind in den Figuren mit denselben Bezugszeichen versehen. Die Rechen- und Auswerteeinheit 18 weist eine Datenschnittstelle 26 auf, über die sich der Positions-Datensatz PD von einem mobilen Datenträger, beispielsweise von einem USB-Stick 25, in die interne Speichereinheit 24 einlesen lässt. Zum Einlesen der Daten wird der USB-Stick 25 in eine USB-Buchse 26 gesteckt, welche an der DGPS-Rover-Einheit 14 vorgesehen ist. Folglich wird der Positions-Datensatz PD nicht von einer externen Speichereinheit 23 beispielsweise eines Dateiservers (Fig. 3), sondern einer internen Speichereinheit 24 ausgelesen.

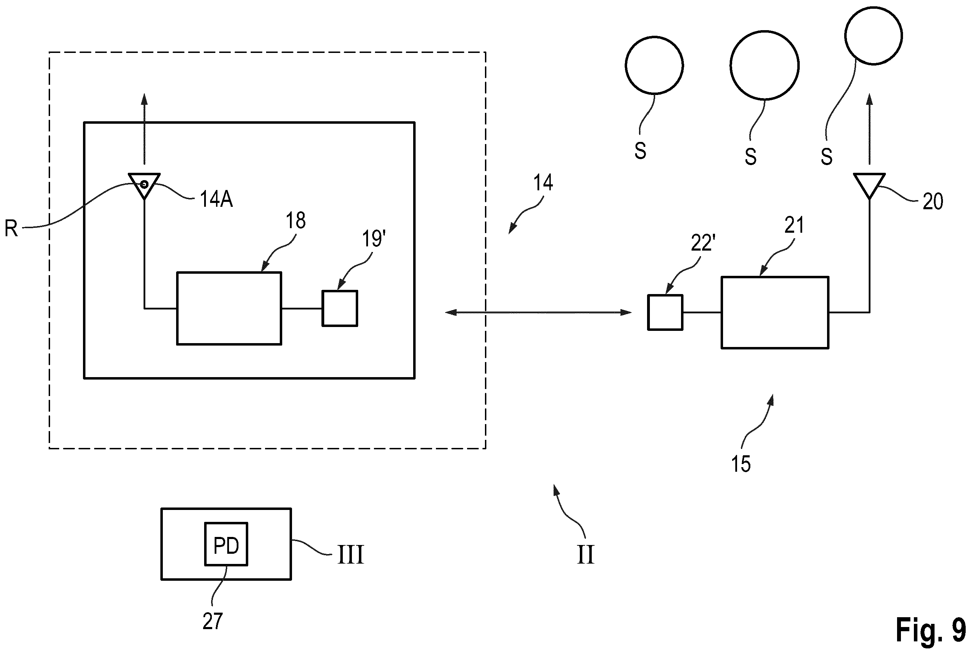

Fig. 9 zeigt ein weiteres Ausführungsbeispiel, bei dem eine Server-Einheit III über eine Speichereinheit 27 verfügt, auf welcher der Positions-Datensatz PD gespeichert ist. Die Server-Einheit III bildet mit der Referenzstation 15 ein Netzwerk, beispielsweise ein WLAN oder die Referenzstation 15 kommuniziert mit der Server-Einheit III über das Internet. Die Rechen- und Auswerteeinheit 21 der Referenzstation 15 und die Server-Einheit sind derart konfiguriert, dass die Referenzstation 15 die von der Referenzstation 15 bestimmten Referenzstations-Position P1'(X1', Y1', Z1'), P2'(X2', Y2', Z2'), P3(X3', Y3', Z3'), P4(X4', Y4', Z4') an die Server-Einheit III sendet, und diese Positionsdaten von der Server-Einheit III empfangen werden, wobei im Gegensatz zu der in Fig. 3 gezeigten Ausführungsform nicht die DGPS-Rover-Einheit 14, sondern die Server-Einheit III die tatsächliche Referenzstations-Position auf der Grundlage eines Vergleichs der vorgegebenen Positionen der Referenzstation mit der von der Referenzstation bestimmten Referenzstations-Position ermittelt und die tatsächliche Referenzstations-Position beschreibende Positionsdaten P1(X1, Y1, Z1), P2(X2, Y2, Z2), P3(X3, Y3, Z3), P4(X4, Y4, Z4) an die Referenzstation 15 sendet und die Referenzstation diese Positionsdaten empfängt. Bei diesem Ausführungsbeispiel ist eine bidirektionale Datenübertragung zwischen DGPS-Rover-Einheit 14 und Referenzstation 15 nicht erforderlich. Daher verfügt die Referenzstation 15 nur über eine Sendeeinheit 22' und die DGPS-Rover-Einheit 14 nur über eine Empfangseinheit 19'. Die Referenzstation 15 ist weiterhin dazu ausgebildet Daten mit der Server-Einheit III auszutauschen.

Grundsätzlich kann auch der Datenspeicher (USB-Stick 25) an die Referenzstation angeschlossen werden, um den Positions-Datensatz PD an die Referenzstation 15 zu übertragen.

## Patentansprüche

1. Positionsbestimmungssystem zur Bestimmung einer Position eines Referenzpunktes (R) auf einer selbstfahrenden Baumaschine (I) in einem von der Baumaschine unabhängigen Koordinatensystem (X, Y, Z) umfassend eine der Baumaschine (I) zuzuordnende DGPS-Rover-Einheit (14) zum Empfangen von Satellitensignalen eines globalen Navigationssatellitensystems (S) und von Korrektursignalen einer Referenzstation (15), wobei die DGPS-Rover-Einheit (14) derart konfiguriert ist, dass auf der Grundlage der Satellitensignale und der Korrektursignale die Position des Referenzpunktes (R) auf der Baumaschine beschreibende Positionsdaten in einem von der Baumaschine unabhängigen Koordinatensystem (X, Y, Z) bestimmt werden,
eine im Umkreis der Baumaschine (I) aufzustellende Referenzstation (15) zum Senden von Korrektursignalen an die DGPS-Rover-Einheit (14), wobei die Referenzstation (15) derart konfiguriert ist, dass die Korrektursignale auf der Grundlage einer tatsächlichen Referenzstations-Position (P1(X1, Y1, Z1), P2(X2, Y2, Z2), P3(X3, Y3, Z3), P4(X4, Y4, Z4)) und einer von der Referenzstation bestimmten Referenzstations-Position (P1'(X1', Y1', Z1'), P2'(X2', Y2', Z2'), P3'(X3', Y3', Z3'), P4'(X4', Y4', Z4')) berechnet werden,
wobei das Positionsbestimmungssystem derart konfiguriert ist, dass zur Initialisierung der Referenzstation (15) ein vorgegebene Positionen der Referenzstation beschreibender Positions-Datensatz (PD) aus einer Speichereinheit (23, 24, 27) ausgelesen wird, wobei die tatsächliche Referenzstations-Position auf der Grundlage eines Vergleichs der vorgegebenen Positionen der Referenzstation (P1(X1, Y1, Z1), P2(X2, Y2, Z2), P3(X3, Y3, Z3), P4(X4, Y4, Z4)) mit der von der Referenzstation bestimmten Referenzstations-Position (P1'(X1', Y1', Z1'), P2'(X2', Y2', Z2'), P3'(X3', Y3', Z3'), P4'(X4', Y4', Z4')) ermittelt wird,
wobei die Referenzstation (15) und die DGPS-Rover-Einheit (14) derart konfiguriert sind,
dass die Referenzstation (15) Positionsdaten an die DGPS-Rover-Einheit (14) sendet, welche die von der Referenzstation bestimmte Referenzstations-Position (P1'(X1', Y1', Z1'), P2'(X2', Y2', Z2'), P3'(X3', Y3', Z3'), P4'(X4', Y4', Z4')) beschreiben, und die DGPS-Rover-Einheit (14) diese Positionsdaten von der Referenzstation (15) empfängt, und
dass die DGPS-Rover-Einheit (14) den die vorgegebenen Positionen der Referenzstation beschreibenden Positions-Datensatz (PD) aus der Speichereinheit (23, 24, 27) ausliest und die tatsächliche Referenzstations-Position auf der Grundlage des Vergleichs der vorgegebenen Positionen der Referenzstation (P1(X1, Y1, Z1), P2(X2, Y2, Z2), P3(X3, Y3, Z3), P4(X4, Y4, Z4)) mit der von der Referenzstation bestimmten Referenzstations-Position (P1'(X1', Y1', Z1'), P2'(X2', Y2', Z2'), P3'(X3', Y3', Z3'), P4'(X4', Y4', Z4')) ermittelt und die tatsächliche Referenzstations-Position beschreibende Positionsdaten an die Referenzstation (15) sendet und die Referenzstation diese Positionsdaten empfängt.

2. Positionsbestimmungssystem nach Anspruch 1, wobei das Positionsbestimmungssystem derart konfiguriert ist, dass Abweichungen der Koordinatenwerte der vorgegebenen Positionen (P1(X1, Y1, Z1), P2(X2, Y2, Z2), P3(X3, Y3, Z3), P4(X4, Y4, Z4)) der Referenzstation (15) von der von der Referenzstation bestimmten Referenzstations-Position (P1'(X1', Y1', Z1'), P2'(X2', Y2', Z2'), P3'(X3', Y3', Z3'), P4'(X4', Y4', Z4')) bestimmt werden, wobei als tatsächliche Referenzstations-Position (P1(X1, Y1, Z1), P2(X2, Y2, Z2), P3(X3, Y3, Z3), P4(X4, Y4, Z4)) die vorgegebene Position der Referenzstation angenommen wird, deren Koordinatenwerte von den Koordinatenwerten der von der Referenzstation bestimmten Referenzstations-Position (P1'(X1', Y1', Z1'), P2'(X2', Y2', Z2'), P3'(X3', Y3', Z3'), P4'(X4', Y4', Z4')) um einen kleinsten Wert abweicht oder um kleinste Werte abweichen.

3. Positionsbestimmungssystem nach Anspruch 1, wobei das Positionsbestimmungssystem derart konfiguriert ist, dass Abweichungen der Koordinatenwerte der vorgegebenen Positionen (P1(X1, Y1, Z1), P2(X2, Y2, Z2), P3(X3, Y3, Z3), P4(X4, Y4, Z4)) der Referenzstation von der von der Referenzstation bestimmten Referenzstations-Position (P1'(X1', Y1', Z1'), P2'(X2', Y2', Z2'), P3'(X3', Y3', Z3'), P4'(X4', Y4', Z4')) bestimmt werden, wobei als tatsächliche Referenzstations-Position (P1(X1, Y1, Z1), P2(X2, Y2, Z2), P3(X3, Y3, Z3), P4(X4, Y4, Z4)) die vorgegebene Position der Referenzstation angenommen wird, deren Koordinatenwerte von den Koordinatenwerten der von der Referenzstation bestimmten Referenzstations-Position (P1'(X1', Y1', Z1'), P2'(X2', Y2', Z2'), P3'(X3', Y3', Z3'), P4'(X4', Y4', Z4')) um einen Wert abweicht, der kleiner oder gleich als ein vorgegebener Grenzwert ist, oder um Werte abweichen, die kleiner oder gleich als vorgegebene Grenzwerte sind.

4. Positionsbestimmungssystem nach einem der Ansprüche 1 bis 3, wobei die Speichereinheit eine interne Speichereinheit (24) der DGPS-Rover-Einheit (15) ist, auf welcher der Positions-Datensatz (PD) gespeichert ist.

5. Positionsbestimmungssystem nach einem der Ansprüche 1 bis 3, wobei die Speichereinheit eine externe Speichereinheit (23, 27) ist, auf welcher der Positions-Datensatz (PD) gespeichert ist.

6. Positionsbestimmungssystem nach einem der Ansprüche 1 bis 3, wobei das Positionsbestimmungssystem eine Server-Einheit (III) umfasst, welche eine Speichereinheit (27) zum Speichern eines Positions-Datensatzes (PD) aufweist, welcher die vorgegebenen Positionen (P1(X1, Y1, Z1), P2(X2, Y2, Z2), P3(X3, Y3, Z3), P4(X4, Y4, Z4)) der Referenzstation beschreibt, wobei
die Referenzstation (15) und die Server-Einheit (III) derart konfiguriert sind,
dass die Referenzstation (15) an die Server-Einheit (III) Positionsdaten sendet, welche die von der Referenzstation bestimmte Referenzstations-Position beschreiben, und diese Positionsdaten von der Server-Einheit (III) empfangen werden, und
dass die Server-Einheit (III) die tatsächliche Referenzstations-Position auf der Grundlage eines Vergleichs der vorgegebenen Positionen (P1(X1, Y1, Z1), P2(X2, Y2, Z2), P3(X3, Y3, Z3), P4(X4, Y4, Z4)) der Referenzstation mit der von der Referenzstation bestimmten Referenzstations-Position (P1'(X1', Y1', Z1'), P2'(X2', Y2', Z2'), P3'(X3', Y3', Z3'), P4'(X4', Y4', Z4')) ermittelt und die tatsächliche Referenzstations-Position beschreibende Positionsdaten an die Referenzstation (15) sendet und die Referenzstation diese Positionsdaten empfängt.

7. Verfahren zur Bestimmung einer Position eines Referenzpunktes (R) auf einer Baumaschine (I) in einem von der Baumaschine unabhängigen Koordinatensystem (X, Y, Z) umfassend die folgenden Verfahrensschritte:
Bereitstellen einer DGPS-Rover-Einheit (14) an der Baumaschine (I),
wobei die DGPS-Rover-Einheit (14) auf der Grundlage von Satellitensignalen eines globalen Navigationssatellitensystems (S) und von Korrektursignalen einer Referenzstation (15) die Position des Referenzpunktes (R) auf der Baumaschine (I)) beschreibende Positionsdaten in einem von der Baumaschine unabhängigen Koordinatensystem (X, Y, Z) bestimmt,
Aufstellen einer Referenzstation (15) zum Senden von Korrektursignalen an die DGPS-Rover-Einheit (14), wobei die Korrektursignale auf der Grundlage einer tatsächlichen Referenzstations-Position (P1(X1, Y1, Z1), P2(X2, Y2, Z2), P3(X3, Y3, Z3), P4(X4, Y4, Z4)) und einer von der Referenzstation (15) bestimmten Referenzstations-Position (P1'(X1', Y1', Z1'), P2'(X2', Y2', Z2'), P3'(X3', Y3', Z3'), P4'(X4', Y4', Z4')) berechnet werden,
wobei ferner im Rahmen des Verfahrens zur Initialisierung der Referenzstation (15) die tatsächliche Referenzstations-Position auf der Grundlage eines Vergleichs von in einer Speichereinheit (23, 24, 27) gespeicherten vorgegebenen Positionen (P1(X1, Y1, Z1), P2(X2, Y2, Z2), P3(X3, Y3, Z3) P4(X4, Y4, Z4)) der Referenzstation (15) mit der von der Referenzstation (15) bestimmten Referenzstations-Position (P1'(X1', Y1', Z1'), P2'(X2', Y2', Z2'), P3'(X3', Y3', Z3'), P4'(X4', Y4', Z4')) ermittelt wird, wobei
die Referenzstation (15) Positionsdaten (P1'(X1', Y1', Z1'), P2'(X2', Y2', Z2'), P3'(X3', Y3', Z3'), P4'(X4', Y4', Z4')) an die DGPS-Rover-Einheit (14) oder eine Server-Einheit (III) sendet, welche die von der Referenzstation bestimmte Referenzstations-Position beschreiben, und die DGPS-Rover-Einheit (14) bzw. die Servereinheit (III) diese Positionsdaten von der Referenzstation (15) empfängt, und wobei
die DGPS-Rover-Einheit (14) bzw. die Server-Einheit (III) die tatsächliche Referenzstations-Position auf der Grundlage des Vergleichs der in der Speichereinheit (23, 24, 27) gespeicherten vorgegebenen Positionen (P1(X1, Y1, Z1), P2(X2, Y2, Z2), P3(X3, Y3, Z3), P4(X4, Y4, Z4)) der Referenzstation mit der von der Referenzstation (15) bestimmten Referenzstations-Position (P1'(X1', Y1', Z1'), P2'(X2', Y2', Z2'), P3'(X3', Y3', Z3'), P4'(X4', Y4', Z4')) ermittelt und die tatsächliche Referenzstations-Position beschreibende Positionsdaten an die Referenzstation (15) sendet und die Referenzstation diese Positionsdaten empfängt.

8. Verfahren nach Anspruch 7, wobei Abweichungen der Koordinatenwerte der vorgegebenen Positionen (P1(X1, Y1, Z1), P2(X2, Y2, Z2), P3(X3, Y3, Z3), P4(X4, Y4, Z4)) der Referenzstation (15) von der gemessenen Referenzstations-Position (P1'(X1', Y1', Z1'), P2'(X2', Y2', Z2'), P3'(X3', Y3', Z3'), P4'(X4', Y4', Z4')) bestimmt werden, wobei als tatsächliche Referenzstations-Position die vorgegebene Position der Referenzstation angenommen wird, deren Koordinatenwerte von den Koordinatenwerten der von der Referenzstation bestimmten Referenzstations-Position um einen kleinsten Wert abweicht oder um kleinste Werte abweichen.

9. Verfahren nach Anspruch 7, wobei Abweichungen der Koordinatenwerte der vorgegebenen Positionen (P1(X1, Y1, Z1), P2(X2, Y2, Z2), P3(X3, Y3, Z3), P4(X4, Y4, Z4)) der Referenzstation (15) von der gemessenen Referenzstations-Position (P1'(X1', Y1', Z1'), P2'(X2', Y2', Z2'), P3'(X3', Y3', Z3'), P4'(X4', Y4', Z4')) bestimmt werden, wobei als tatsächliche Referenzstations-Position die vorgegebene Position der Referenzstation angenommen wird, deren Koordinatenwerte von den Koordinatenwerten der von Referenzstation bestimmten Referenzstations-Position um einen Wert abweicht, der kleiner oder gleich als ein vorgegebener Grenzwert ist, oder um Werte abweichen, die kleiner oder gleich als vorgegebene Grenzwerte sind.

## Claims

1. A position determining system for determining the position of a reference point (R) on a self-propelled construction machine (I) in a coordinate system (X, Y, Z) independent of the construction machine, comprising
a DGPS rover unit (14) to be associated with the construction machine (I) for receiving satellite signals of a global navigation satellite system (S) and correction signals of a reference station (15), wherein the DGPS rover unit (14) is configured such that position data describing the position of the reference point (R) on the construction machine is determined in a coordinate system (X, Y, Z) independent of the construction machine on the basis of the satellite signals and the correction signals,
a reference station (15) to be placed in the periphery of the construction machine (I) for transmitting correction signals to the DGPS rover unit (14), wherein the reference station (15) is configured in such a way that the correction signals are calculated on the basis of an actual reference station position (P1(X1, Y1, Z1), P2(X2, Y2, Z2), P3(X3, Y3, Z3), P4(X4, Y4, Z4)) and a reference station position (P1'(X1', Y1', Z1'), P2'(X2', Y2', Z2'), P3'(X3', Y3', Z3'), P4'(X4', Y4', Z4')) determined by the reference station,
wherein the position determination system is configured in such a way that, for initialisation of the reference station (15), a position dataset (PD) describing predetermined positions of the reference station is read out from a memory unit (23, 24, 27), wherein the actual reference station position is determined on the basis of a comparison of the predetermined positions of the reference station (P1(X1, Y1, Z1), P2(X2, Y2, Z2), P3(X3, Y3, Z3), P4(X4, Y4, Z4)) with the reference station position (P1'(X1', Y1', Z1'), P2'(X2', Y2', Z2'), P3'(X3', Y3', Z3'), P4'(X4', Y4', Z4')) determined by the reference station, wherein the reference station (15) and the DGPS rover unit (14) are configured in such a way
that the reference station (15) transmits position data to the DGPS rover unit (14), which describe the reference station position (P1'(X1', Y1', Z1'), P2'(X2', Y2', Z2'), P3'(X3', Y3', Z3'), P4'(X4', Y4', Z4')) determined by the reference station, and the DGPS rover unit (14) receives these position data from the reference station (15), and
that the DGPS rover unit (14) reads out the position dataset (PD) describing the predetermined positions of the reference station from the memory unit (23, 24, 27) and determines the actual reference station position on the basis of the comparison of the predetermined positions of the reference station (P1(X1, Y1, Z1), P2(X2, Y2, Z2), P3(X3, Y3, Z3), P4(X4, Y4, Z4)) with the reference station position (P1'(X1', Y1', Z1'), P2'(X2', Y2', Z2'), P3'(X3', Y3', Z3'), P4'(X4', Y4', Z4')) determined by the reference station and transmits position data describing the actual reference station position to the reference station (15) and the reference station receives this position data.

2. The position determining system according to claim 1, wherein the position determining system is configured such that deviations of the coordinate values of the predetermined positions (P1(X1, Y1, Z1), P2(X2, Y2, Z2), P3(X3, Y3, Z3), P4(X4, Y4, Z4)) of the reference station (15) from the reference station position (P1'(X1', Y1', Z1'), P2'(X2', Y2', Z2'), P3'(X3', Y3', Z3'), P4'(X4', Y4', Z4')) determined by the reference station are determined, wherein the actual reference station position (P1(X1, Y1, Z1), P2(X2, Y2, Z2), P3(X3, Y3, Z3), P4(X4, Y4, Z4)) is assumed to be the predetermined position of the reference station, the coordinate values of which deviate from the coordinate values of the reference station position (P1'(X1', Y1', Z1'), P2'(X2', Y2', Z2'), P3'(X3', Y3', Z3'), P4'(X4', Y4', Z4')) determined by the reference station by a smallest value or deviate by smallest values.

3. The position determination system according to claim 1, wherein the position determination system is configured such that deviations of the coordinate values of the predetermined positions (P1(X1, Y1, Z1), P2(X2, Y2, Z2), P3(X3, Y3, Z3), P4(X4, Y4, Z4)) of the reference station from the reference station position (P1'(X1', Y1', Z1'), P2'(X2', Y2', Z2'), P3'(X3', Y3', Z3'), P4'(X4', Y4', Z4')) determined by the reference station are determined, wherein the actual reference station position (P1(X1, Y1, Z1), P2(X2, Y2, Z2), P3(X3, Y3, Z3), P4(X4, Y4, Z4)) is assumed to be the predetermined position of the reference station, the coordinate values of which deviate from the coordinate values of the reference station position determined by the reference station (P1'(X1', Y1', Z1'), P2'(X2', Y2', Z2'), P3'(X3', Y3', Z3'), P4'(X4', Y4', Z4')) by a value smaller than or equal to a predetermined limit value or by values smaller than or equal to predetermined limit values.

4. The position determination system according to any of claims 1 to 3, wherein the memory unit is an internal memory unit (24) of the DGPS rover unit (15) on which the position dataset (PD) is stored.

5. The position determination system according to any of claims 1 to 3, wherein the memory unit is an external memory unit (23, 27) on which the position dataset (PD) is stored.

6. The position determination system according to any of claims 1 to 3, wherein the position determination system comprises a server unit (III) having a memory unit (27) for storing a position dataset (PD) describing the predetermined positions (P1(X1, Y1, Z1), P2(X2, Y2, Z2), P3(X3, Y3, Z3), P4(X4, Y4, Z4)) of the reference station, wherein the reference station (15) and the server unit (III) are configured such that
the reference station (15) transmits to the server unit (III) position data describing the reference station position determined by the reference station, and these position data are received by the server unit (III), and
the server unit (III) determines the actual reference station position on the basis of a comparison of the predetermined positions (P1(X1, Y1, Z1), P2(X2, Y2, Z2), P3(X3, Y3, Z3), P4(X4, Y4, Z4)) of the reference station with the reference station position determined by the reference station (P1'(X1', Y1', Z1'), P2'(X2', Y2', Z2'), P3'(X3', Y3', Z3'), P4'(X4', Y4', Z4')) and transmits position data describing the actual reference station position to the reference station (15) and the reference station receives this position data.

7. A method for determining a position of a reference point (R) on a construction machine (I) in a coordinate system (X, Y, Z) independent of the construction machine, comprising the following method steps:
providing a DGPS rover unit (14) at the construction machine (I), wherein the DGPS rover unit (14) determines position data describing the position of the reference point (R) on the construction machine (I)) in a coordinate system (X, Y, Z) independent of the construction machine on the basis of the satellite signals of a global navigation satellite system (S) and correction signals of a reference station (15),
setting up a reference station (15) for transmitting correction signals to the DGPS rover unit (14), wherein the correction signals are calculated on the basis of an actual reference station position (P1(X1, Y1, Z1), P2(X2, Y2, Z2), P3(X3, Y3, Z3), P4(X4, Y4, Z4)) and a reference station position (P1'(X1', Y1', Z1'), P2'(X2', Y2', Z2'), P3'(X3', Y3', Z3'), P4'(X4', Y4', Z4')) determined by the reference station (15),
wherein further within the method, for initialising the reference station (15), the actual reference station position is determined on the basis of a comparison of predetermined positions of the reference station (15) (P1(X1, Y1, Z1), P2(X2, Y2, Z2)) stored in a memory unit (23, 24, 27), P3(X3, Y3, Z3), P4(X4, Y4, Z4)) with the reference station position (P1'(X1', Y1', Z1'), P2'(X2', Y2', Z2'), P3'(X3', Y3', Z3'), P4'(X4', Y4', Z4')) determined by the reference station (15), wherein the reference station (15) sends position data (P1'(X1', Y1', Z1'), P2'(X2', Y2', Z2'), P3'(X3', Y3', Z3'), P4'(X4', Y4', Z4')) to the DGPS rover unit (14) or a server unit (III), which describe the reference station position determined by the reference station, and the DGPS rover unit (14) or the server unit (III) receives this position data from the reference station (15), and wherein the DGPS rover unit (14) or the server unit (III) determines the actual reference station position on the basis of a comparison of the predetermined positions (P1(X1, Y1, Z1), P2(X2, Y2, Z2), P3(X3, Y3, Z3), P4(X4, Y4, Z4)) of the reference station stored in a memory (23, 24, 27) with the reference station position (P1'(X1', Y1', Z1'), P2'(X2', Y2', Z2'), P3'(X3', Y3', Z3'), P4'(X4', Y4', Z4')) determined by the reference station (15) and transmits position data describing the actual reference station position to the reference station (15) and the reference station receives this position data.

8. The method according to claim 7, wherein deviations of the coordinate values of the predetermined positions (P1(X1, Y1, Z1), P2(X2, Y2, Z2), P3(X3, Y3, Z3), P4(X4, Y4, Z4)) of the reference station (15) from the measured reference station position (P1'(X1', Y1', Z1'), P2'(X2', Y2', Z2'), P3'(X3', Y3', Z3'), P4'(X4', Y4', Z4')) are determined, wherein the actual reference station position is assumed to be the predetermined position of the reference station whose coordinate values deviate from the coordinate values of the reference station position determined by the reference station by a smallest value or deviate by smallest values.

9. The method according to claim 7, wherein deviations of the coordinate values of the predetermined positions (P1(X1, Y1, Z1), P2(X2, Y2, Z2), P3(X3, Y3, Z3), P4(X4, Y4, Z4)) of the reference station (15) from the measured reference station position (P1'(X1', Y1', Z1'), P2'(X2', Y2', Z2'), P3'(X3', Y3', Z3'), P4'(X4', Y4', Z4')) are determined, wherein the actual reference station position is assumed to be the predetermined position of the reference station whose coordinate values deviate from the coordinate values of the reference station position determined by the reference station by a value smaller than or equal to a predetermined limit value or by values smaller than or equal to predetermined limit values.

## Revendications

1. Système de détermination de position pour la détermination d'une position d'un point de référence (R) sur un engin de chantier (I) autopropulsé dans un système de coordonnées (X, Y, Z) indépendant de l'engin de chantier, comprenant
une unité mobile DGPS (14) à attribuer à l'engin de chantier (I) pour recevoir des signaux de satellite d'un système mondial de navigation par satellite (S) et des signaux de correction d'une station de référence (15), dans lequel l'unité mobile DGPS (14) est configurée de telle sorte que, sur la base des signaux de satellite et des signaux de correction, des données de position décrivant la position du point de référence (R) sur l'engin de chantier sont déterminées dans un système de coordonnées (X, Y, Z) indépendant de l'engin de chantier,
une station de référence (15) à installer à proximité de l'engin de chantier (I) pour envoyer des signaux de correction à l'unité mobile DGPS (14), dans lequel la station de référence (15) est configurée de telle sorte que les signaux de correction sont calculés sur la base d'une position réelle de la station de référence (P1(X1, Y1, Z1), P2(X2, Y2, Z2), P3(X3, Y3, Z3), P4(X4, Y4, Z4)) et d'une position de la station de référence déterminée par la station de référence (P1'(X1', Y1', Z1'), P2'(X2', Y2', Z2'), P3'(X3', Y3', Z3'), P4'(X4', Y4', Z4')),
dans lequel le système de détermination de position est configuré de telle sorte que, pour l'initialisation de la station de référence (15), un jeu de données de position (PD) décrivant des positions prédéfinies de la station de référence est lu à partir d'une unité de mémoire (23, 24, 27), dans lequel la position réelle de la station de référence est déterminée sur la base d'une comparaison des positions prédéfinies de la station de référence (P1(X1, Y1, Z1), P2(X2, Y2, Z2), P3(X3, Y3, Z3), P4(X4, Y4, Z4)) avec la position de la station de référence déterminée par la station de référence (P1'(X1', Y1', Z1'), P2'(X2', Y2', Z2'), P3'(X3', Y3', Z3'), P4'(X4', Y4', Z4')),
dans lequel la station de référence (15) et l'unité mobile DGPS (14) sont configurées de telle sorte
que la station de référence (15) envoie à l'unité mobile DGPS (14) des données de position, qui décrivent la position de la station de référence déterminée par la station de référence (P1'(X1', Y1', Z1'), P2'(X2', Y2', Z2'), P3'(X3', Y3', Z3'), P4'(X4', Y4', Z4')), et l'unité mobile DGPS (14) reçoit ces données de position de la station de référence (15), et
que l'unité mobile DGPS (14) lit le jeu de données de position (PD) décrivant les positions prédéfinies de la station de référence à partir de l'unité de mémoire (23, 24, 27) et établit la position réelle de la station de référence sur la base de la comparaison des positions prédéfinies de la station de référence (P1(X1, Y1, Z1), P2(X2, Y2, Z2), P3(X3, Y3, Z3), P4(X4, Y4, Z4)) avec la position de la station de référence déterminée par la station de référence (P1'(X1', Y1', Z1'), P2'(X2', Y2', Z2'), P3'(X3', Y3', Z3'), P4'(X4', Y4', Z4')) et envoie à la station de référence (15) des données de position décrivant la position réelle de la station de référence, et la station de référence reçoit ces données de position.

2. Système de détermination de position selon la revendication 1, dans lequel le système de détermination de position est configuré de telle sorte que des écarts des valeurs de coordonnées des positions prédéfinies (P1(X1, Y1, Z1), P2(X2, Y2, Z2), P3(X3, Y3, Z3), P4(X4, Y4, Z4)) de la station de référence (15) par rapport à la position de la station de référence déterminée par la station de référence (P1'(X1', Y1', Z1'), P2'(X2', Y2', Z2'), P3'(X3', Y3', Z3'), P4'(X4', Y4', Z4')) sont déterminés, dans lequel la position prédéfinie de la station de référence dont les valeurs de coordonnées s'écartent des valeurs de coordonnées de la position de la station de référence déterminée par la station de référence (P1'(X1', Y1', Z1'), P2'(X2', Y2', Z2'), P3'(X3', Y3', Z3'), P4'(X4', Y4', Z4')) d'une plus petite valeur ou s'écartent de plus petites valeurs est prise comme position réelle de la station de référence (P1(X1, Y1, Z1), P2(X2, Y2, Z2), P3(X3, Y3, Z3), P4(X4, Y4, Z4)).

3. Système de détermination de position selon la revendication 1, dans lequel le système de détermination de position est configuré de telle sorte que des écarts des valeurs de coordonnées des positions prédéfinies (P1(X1, Y1, Z1), P2(X2, Y2, Z2), P3(X3, Y3, Z3), P4(X4, Y4, Z4)) de la station de référence par rapport à la position de la station de référence déterminée par la station de référence (P1'(X1', Y1', Z1'), P2'(X2', Y2', Z2'), P3'(X3', Y3', Z3'), P4'(X4', Y4', Z4')) sont déterminés, dans lequel la position prédéfinie de la station de référence dont les valeurs de coordonnées s'écartent des valeurs de coordonnées de la position de la station de référence déterminée par la station de référence (P1'(X1', Y1', Z1'), P2'(X2', Y2', Z2'), P3'(X3', Y3', Z3'), P4'(X4', Y4', Z4')) d'une valeur qui est inférieure ou égale à une valeur seuil prédéfinie, ou s'écartent de valeurs qui sont inférieures ou égales à des valeurs seuils prédéfinies, est prise comme position réelle de la station de référence (P1(X1, Y1, Z1), P2(X2, Y2, Z2), P3(X3, Y3, Z3), P4(X4, Y4, Z4)).

4. Système de détermination de position selon l'une quelconque des revendications 1 à 3, dans lequel l'unité de mémoire est une unité de mémoire interne (24) de l'unité mobile DGPS (15), sur laquelle le jeu de données de position (PD) est stocké.

5. Système de détermination de position selon l'une quelconque des revendications 1 à 3, dans lequel l'unité de mémoire est une unité de mémoire externe (23, 27), sur laquelle le jeu de données de position (PD) est stocké.

6. Système de détermination de position selon l'une quelconque des revendications 1 à 3, dans lequel le système de détermination de position comprend une unité de serveur (III) qui présente une unité de mémoire (27) pour le stockage d'un jeu de données de position (PD) qui décrit les positions prédéfinies (P1(X1, Y1, Z1), P2(X2, Y2, Z2), P3(X3, Y3, Z3), P4(X4, Y4, Z4)) de la station de référence, dans lequel la station de référence (15) et l'unité de serveur (III) sont configurées de telle sorte que la station de référence (15) envoie à l'unité de serveur (III) des données de position qui décrivent la position de la station de référence déterminée par la station de référence, et ces données de position sont reçues par l'unité de serveur (III), et que l'unité de serveur (III) établit la position réelle de la station de référence sur la base d'une comparaison des positions prédéfinies (P1(X1, Y1, Z1), P2(X2, Y2, Z2), P3(X3, Y3, Z3), P4(X4, Y4, Z4)) de la station de référence avec la position de la station de référence déterminée par la station de référence (P1'(X1', Y1', Z1'), P2'(X2', Y2', Z2'), P3'(X3', Y3', Z3'), P4'(X4', Y4', Z4')) et envoie à la station de référence (15) des données de position décrivant la position réelle de la station de référence et la station de référence reçoit ces données de position.

7. Procédé de détermination d'une position d'un point de référence (R) sur un engin de chantier (I) dans un système de coordonnées (X, Y, Z) indépendant de l'engin de chantier, comprenant les étapes de procédé suivantes :
la fourniture d'une unité mobile DGPS (14) sur l'engin de chantier (I), dans lequel l'unité mobile DGPS (14), sur la base de signaux de satellite d'un système mondial de navigation par satellite (S) et de signaux de correction d'une station de référence (15), détermine des données de position décrivant la position du point de référence (R) sur l'engin de chantier (I) dans un système de coordonnées (X, Y, Z) indépendant de l'engin de chantier,
l'installation d'une station de référence (15) pour l'envoi de signaux de correction à l'unité mobile DGPS (14), dans lequel les signaux de correction sont calculés sur la base d'une position réelle de la station de référence (P1(X1, Y1, Z1), P2(X2, Y2, Z2), P3(X3, Y3, Z3), P4(X4, Y4, Z4)) et d'une position de la station de référence déterminée par la station de référence (15) (P1'(X1', Y1', Z1'), P2'(X2', Y2', Z2'), P3'(X3', Y3', Z3'), P4'(X4', Y4', Z4')),
dans lequel en outre, dans le cadre du procédé, pour l'initialisation de la station de référence (15), la position réelle de la station de référence est établie sur la base d'une comparaison de positions prédéfinies (P1(X1, Y1, Z1), P2(X2, Y2, Z2), P3(X3, Y3, Z3), P4(X4, Y4, Z4)) stockées dans une unité de mémoire (23, 24, 27) de la station de référence (15) avec la position de la station de référence déterminée par la station de référence (15) (P1'(X1', Y1', Z1'), P2'(X2', Y2', Z2'), P3'(X3', Y3', Z3'), P4'(X4', Y4', Z4')), dans lequel
la station de référence (15) envoie des données de position (P1'(X1', Y1', Z1'), P2'(X2', Y2', Z2'), P3'(X3', Y3', Z3'), P4'(X4', Y4', Z4')) à l'unité mobile DGPS (14) ou à une unité de serveur (III), qui décrivent la position de la station de référence déterminée par la station de référence, et l'unité mobile DGPS (14) ou l'unité de serveur (III) reçoit ces données de position de la station de référence (15), et dans lequel
l'unité mobile DGPS (14) ou l'unité de serveur (III) détermine la position réelle de la station de référence sur la base de la comparaison des positions prédéfinies stockées dans l'unité de mémoire (23, 24, 27) (P1(X1, Y1, Z1), P2(X2, Y2, Z2), P3(X3, Y3, Z3), P4(X4, Y4, Z4)) de la station de référence avec la position de la station de référence déterminée par la station de référence (15) (P1'(X1', Y1', Z1'), P2'(X2', Y2', Z2'), P3'(X3', Y3', Z3'), P4'(X4', Y4', Z4')) et envoie à la station de référence (15) des données de position décrivant la position réelle de la station de référence et la station de référence reçoit ces données de position.

8. Procédé selon la revendication 7, dans lequel des écarts des valeurs de coordonnées des positions prédéfinies (P1(X1, Y1, Z1), P2(X2, Y2, Z2), P3(X3, Y3, Z3), P4(X4, Y4, Z4)) de la station de référence (15) par rapport à la position mesurée de la station de référence (P1'(X1', Y1', Z1'), P2'(X2', Y2', Z2'), P3'(X3', Y3', Z3'), P4'(X4', Y4', Z4')) sont déterminés, dans lequel la position prédéfinie de la station de référence dont les valeurs de coordonnées s'écartent des valeurs de coordonnées de la position de la station de référence déterminée par la station de référence d'une plus petite valeur ou s'écartent de plus petites valeurs est prise comme position réelle de la station de référence.

9. Procédé selon la revendication 7, dans lequel des écarts des valeurs de coordonnées des positions prédéfinies (P1(X1, Y1, Z1), P2(X2, Y2, Z2), P3(X3, Y3, Z3), P4(X4, Y4, Z4)) de la station de référence (15) par rapport à la position mesurée de la station de référence (P1'(X1', Y1', Z1'), P2'(X2', Y2', Z2'), P3'(X3', Y3', Z3'), P4'(X4', Y4', Z4')) sont déterminés, dans lequel la position prédéfinie de la station de référence dont les valeurs de coordonnées s'écartent des valeurs de coordonnées de la position de la station de référence déterminée par la station de référence d'une valeur qui est inférieure ou égale à une valeur seuil prédéfinie, ou s'écartent de valeurs qui sont inférieures ou égales à des valeurs seuils prédéfinies est prise comme position réelle de la station de référence.
